## Europäisches Patentamt

## European Patent Office

## Office européen des brevets

(11) Veröffentlichungsnummer: **0 133 287**
**B1**

# (12) EUROPÄISCHE PATENTSCHRIFT

(45) Veröffentlichungstag der Patentschrift:
**29.03.89**

(21) Anmeldenummer: **84108771.1**

(22) Anmeldetag: **25.07.84**

(51) Int. Cl.⁴: **B 31 B 1/16,** F 16 H 21/14

(54) Vorrichtung zur Steuerung des Bewegungsablaufes in einer Folien-verarbeitungsmaschine.

(30) Priorität: **30.07.83 DE 3327610**

(43) Veröffentlichungstag der Anmeldung:
**20.02.85 Patentblatt 85/8**

(45) Bekanntmachung des Hinweises auf die Patenterteilung:
**29.03.89 Patentblatt 89/13**

(84) Benannte Vertragsstaaten:
**BE DE FR IT**

(56) Entgegenhaltungen:
EP-A-0 093 305
AT-B-189 002
DE-A-3 214 716
GB-A-337 659

BUSSIEN-Automobiltechnisches Handbuch, Berlin
1965, Seiten 412-417

(73) Patentinhaber: **Bendig, Johannes, Talstrasse 72,
D-4018 Langenfeld (DE)**
Patentinhaber: **Bendig, Franz, Talstrasse 72, D-4018
Langenfeld (DE)**

(72) Erfinder: **Bendig, Johannes, Talstrasse 72, D-4018
Langenfeld (DE)**
Erfinder: **Bendig, Franz, Talstrasse 72, D-4018
Langenfeld (DE)**

(74) Vertreter: **Selting, Günther, Dipl.- Ing.,
Patentanwälte von Kreisler, Selting, Werner
Deichmannhaus am Hauptbahnhof, D-5000 Köln 1
(DE)**

EP 0 133 287 B1

LIBER, STOCKHOLM 1989

## Beschreibung

Die Erfindung betrifft eine Vorrichtung zur Steuerung des Bewegungsablaufes in einer Folienverarbeitungsmaschine zum Herstellen von Beuteln, Säcken oder dergleichen Verpackungen aus thermoplastischer Kunstoffolie, gemäß dem Oberbegriff des Patentanspruches 1. Folienverarbeitungsmaschinen dieser Art sind bekannt.

Folienverarbeitungsmaschinen der vorgenannten Art müssen vielseitige Möglichkeiten der Verstellung oder Steuerung der einzelnen Arbeitsvorgänge haben, um den vielfachen Anforderungen gerecht zu werden. So müssen sie unter anderem geeignet sein, ohne große Umstellarbeiten Beutel, Säcke oder dergleichen Verpackungen unterschiedlicher Länge herzustellen.

Bei Folienverarbeitungsmaschinen, die kontinuierlich nach dem Rotationssystem arbeiten, erfolgt die Einstellung unterschiedlicher Beutellängen durch die Maßgabe, daß die Umfangsgeschwindigkeit der Trommel größer ist als die Zuführgeschwindigkeit des Folienschlauches und der Schlauch an der Trommel abgeschnitten wird. Durch die Bestimmung der Umfangsgeschwindigkeit der Trommel und der Zuführgeschwindigkeit des Folienschlauches läßt sich dann die Beutellänge bestimmen.

Bei diskontinuierlich arbeitenden Folienverarbeitungsmaschinen werden Vorzugswalzen verwendet, die über ein Getriebe mit einer Kupplung und einer Bremse angetrieben sind. Dieses Getriebe unterliegt hohen Beanspruchungen, weil eine schlagartige Rotation und ein schlagartiges Abbremsen erforderlich ist. Die Bestimmung der Beutellänge erfolgt durch die Einstellung der Zeit, in der die Kupplung zum Antrieb der Vorzugswalze und die Bremse zum Blockieren der Vorzugswalze tätig ist. Je länger die Kupplung eingeschaltet ist, um so größer ist der Vorschub und entsprechend auch die Beutellänge.

Die Kupplung und die Bremse werden elektrisch betätigt. Die Betätigung erfolgt über eine Hockenscheibe, deren Hocken als Signalgeber ein elektrisches Schaltelement mit einer an der Nocke anliegenden Tastrolle ist. Die der Kupplung zugeordnete Nockenscheibe und der Bremse zugeordnete Hockenscheibe sind an einer Antriebswelle angeordnet. Bisher erfolgt die Verstellung derart, daß die Nockenscheiben an ihrer Antriebswelle verdreht und dann arretiert werden. Diese Maßnahme ist umständlich. Auch ergibt sich, daß abhängig von der Beutellänge sonstige Folgemaßnahmen verstellt werden müssen.

Aus dem Buch von Bussien "Automobiltechnisches Handbuch", 1. Band, Berlin 1965, S. 412 - 417, ist ein Zündverteiler für Verbrennungsmotoren bekannt, bei dem der Kontaktarm zusammen mit den Kontakten an einer drehbaren Scheibe angebracht ist. Die Steuerung des Kontaktarms erfolgt durch Nocken der rotierenden Steuerwelle. Die drehbare Scheibe wird durch den Unterdruck im Vergaser verdreht, um den Zündzeitpunkt in Abhangigkeit von der Last zu verändern.

Die vorliegende Erfindung geht von der Aufgabe aus, eine Vorrichtung zur Steuerung der Bewegungsabläufe in einer Folienverarbeitungsmaschine zu schaffen, die bezüglich der Verstellung der Beutellänge einfach ist.

Die Lösung dieser Aufgabe erfolgt erfindungsgemäß mit den im kennzeichnendes Teil des Patentanspruchs 1 angegebenen Merkmalen.

Die erfindungsgemäße Lösung gibt eine sehr einfache Steuerung, weil nicht die Nockenscheiben an der Welle verdreht zu werden brauchen, sondern lediglich der Signalgeber um die Drehachse der Nockenscheibe verstellt wird. Mit der erfindungsgemäßen Lösung werden somit mit einfachen Mitteln durch eine einzige Verstellung mehrere Bewegungsabläufe gleichzeitig im Sinne einer Änderung geregelt.

In weiterer erfindungsgemäßer Ausgestaltung wird zur Steuerung des Bewegungsablaufes oder vieler Bewegungsabläufe ein Getriebe gemäß Anspruch 3 vorgeschlagen. Ein solches Getriebe ist in EP-A-93 305 beschrieben, die gemäß Art. 54 (3) als Stand der Technik gilt.

Ein Getriebe zur Erzeugung unterschiedlicher Umfangsgeschwindigkeiten oder Drehzahlen der abgehenden Welle, die über den Zeitraum einer Umdrehung veränderbar ist, aber auch über den Zeitraum mehrerer Umdrehungen veränderbar ist, wobei zugleich bei weiterhin rotierender Eingangswelle die Ausgangswelle stillstehen kann, ergibt in einer Folienverarbeitungsmaschine vielfache mögliche Anwendungen und Bewegungsabläufe zur Steuerung, die im Endergebnis eine wesentliche Vereinfachung darstellen. Dieses Getriebe vorbeschriebener grundsätzlicher Ausbildung ermöglicht die Steuerung der Schweißbalken in Bezug auf die Schweißzeit. Es ist besonders vorteilhaft in Verbindung mit einem Schweißbalkenantrieb über eine Nockenscheibe, weil nunmehr durch Änderung der Drehzahl der Nockenscheibe bei einer Umdrehung, unabhängig von der Flächenbemessung oder Umfangsbemessung des Nockens an der Nockenscheibe, eine wahlweise Schweißzeit eingestellt werden kann.

Das erfindungsgemäße Getriebe ist auch in hervorragendem Maße geeignet zum Antrieb der Vorzugswalze, die eine elektrisch wirkende Kupplung und Bremse ersetzt.

Die Erfindung ist in der Zeichnung beispielhaft dargestellt. Es zeigen:

Fig. 1    eine Folienverarbeitungsmaschine in Seitenansicht, teilweise im Schnitt,

Fig. 2    die Folienverarbeitungsmaschine nach Fig. 1 in der Ansicht von vorne,

Fig. 3 eine Verstellvorrichtung in perspektivischer Darstellung,

Fig. 4 die Verstellvorrichtung nach Fig. 3 in der Ansicht von vorne,

Fig. 5 die Vorrichtung nach Fig. 4 in anderer Stellung,

Fig. 6 ein Getriebe in Oberansicht und im Schnitt,

Fig. 7 und 8 verschiedene Einstellungen im Getriebe,

Fig. 9 ein Getriebe in Oberansicht und im Schnitt,

Fig. 10 das Getriebe nach Fig. 9 in anderer Stellung,

Fig. 11 den gekrümmten Verlauf einer Führungsnut,

Fig. 12 ein anderer gekrümmter Verlauf einer Führungsnut,

Fig. 13 in Seitenansicht die Lagerung der Zwischenscheibe,

Fig. 14 Darstellung unterschiedlicher Differenzgeschwindigkeiten zwischen Eingangswelle und Ausgangswelle,

Fig. 15 einen vertikalen Schnitt durch ein abgewandeltes Getriebe.

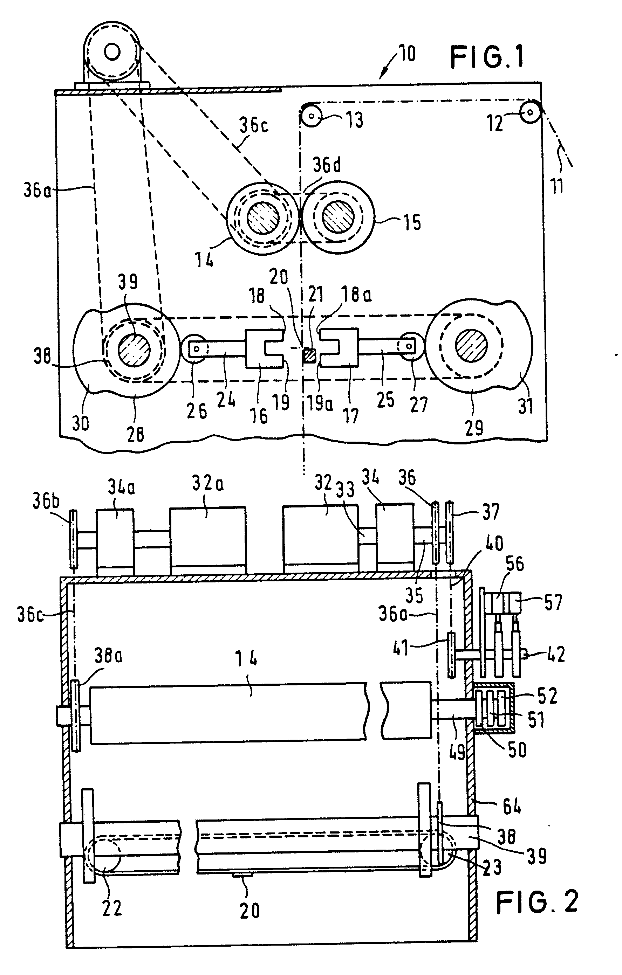

Fig. 1 zeigt die Folienverarbeitungsmaschine 10. Der Folienschlauch oder die doppellagige Folienbahn 11 wird über die beiden Umlenkwalzen 12 und 13 dem Vorzugswalzenpaar 14 und 15 zugeführt und gelangt zwischen die beiden Schweißbalken 16 und 17 mit den beiden gegenüberliegenden oberenschweißbändern 18 und 18a sowie unteren Schweißbändern 19 und 19a. Der Folienschlauch 11 wird quer zu seiner Längserstreckung geschnitten durch ein Messer 20, das nach Art einer Rasierklinge ausgebildet an dem Riemen aus Gummi 21 befestigt ist, der um die in Fig. 2 dargestellten Umlenkrollen 22 und 23 läuft, wobei, wie später noch angegeben wird, die Umlenkrolle 22 angetrieben ist.

Die vorerwähnten Schweißbalken 16 und 17 haben zugeordnete Arme 24 und 25, an denen Rollen 26 und 27 angeordnet sind, die an den zugeordneten Hockenscheiben 28 und 29 anliegen, deren Nocken 30 und 31 die Schweißbalken in Richtung zu der zu verarbeitenden Folie bewegen. Es ist eine solche Anordnung vorhanden, daß die Schweißbalken selbsttätig in die Ausgangsstellung nach Fig. 1 zurückgehen. Dies kann durch Anwendung von in der Zeichnung nicht dargestellten Druck- oder Zugfedern geschehen.

Fig. 2 zeigt einen elektrischen Antriebsmotor 32, dessen Welle 33 die Eingangswelle eines Getriebes 34 ist, an dem zwei Kettenräder 36 und 37 vorhanden sind, wobei die Kette 36, wie ebenfalls in Fig. 1 dargestellt, über das Kettenrad 38 die Welle 39 zur Drehung der Hockenscheibe 28 antreibt.

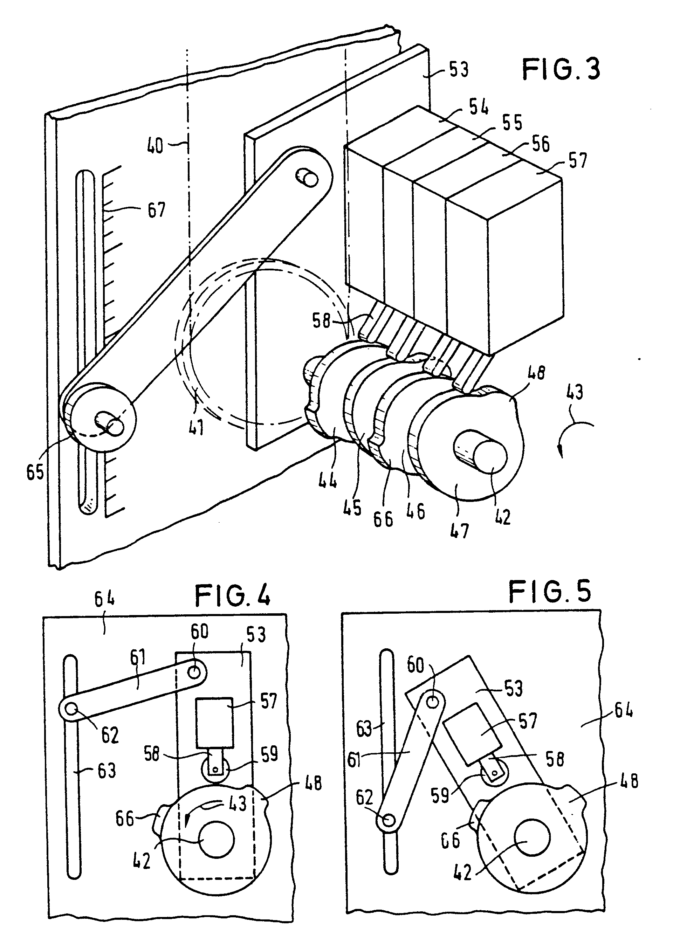

Von dem Kettenrad 37 wird eine Kette 40 angetrieben, die über ein Kettenrad 41 eine Welle 42 antreibt, an der einige Steuernocken vorhanden sind, die nachfolgend im einzelnen anhand von Fig. 3 beschrieben werden.

Die Welle 42 wird, wie zu Fig. 2 dargelegt, über die Kette 40 und das an ihr befindliche Kettenrad 41 angetrieben. Die Drehrichtung 43 erfolgt entgegen dem Uhrzeigersinn. An der Welle 42 sind hintereinander mehrere Nockenscheiben mit zugeordneten über die Umfangsfläche vorstehenden Schaltnocken vorhanden. Die Nockenscheibe 44 dient zur Steuerung der Luft, die Nockenscheibe 45 zur Steuerung der Fotozelle, die Nockenscheiben 46 und 47 steuern die Vorzugswalzen 14 und 15 in der Weise, daß die Nockenscheibe 46 die Bremse ein- und die Kupplung ausschaltet. Dies sei zunächst schematisch anhand von Fig. 2 erläutert, weil dort die Vorzugswalze 14 dargestellt ist, an deren Welle 49 mit dem dort befindlichen Flansch 50 die Kupplung 51 oder die Bremse 52 angreift. Die Nockenscheiben 46 und 47 steuern somit die Kupplung und die Bremse im Antrieb der Vorzugswalze 14.

Um die Welle 42 schwenkbar ist ein Träger 53 in Gestalt einer Platte vorhanden, an der als Signalgeber jeweils den Nockenscheiben 44 bis 47 zugeordnet, elektrische Schaltelemente 54, 55, 56 und 57 vorhanden sind. Diese haben jeweils zugeordnete Taster 58, die entsprechend der Darstellung in den Figuren 4 und 5 vorne mit einer Laufrolle 59 versehen sind. Der Träger 53 trägt über die Achse 60 den Hebel 61, der über eine Schraube 62 in dem sich in vertikaler Ebene erstreckenden Langloch 63 der Seitenwandung 64 der Folienverarbeitungsmaschine 10 angeordnet ist. Durch Lösen der mit einem entsprechenden Handgriff 65 versehenen Schraube 62 kann über den Hebel 61 die Winkelstellung des Trägers 53 zur Welle 42 und entsprechend den daran befindlichen Nockenscheiben verändert werden. Bei den Schaltelementen 54 bis 57 kann es sich auch um berührungslose Schaltelemente handeln.

Fig. 4 zeigt, verglichen mit einer Kompaßrose, die Stellung 0°, während Fig. 5 die Stellung 300° zeigt. Da die Nockenscheibe in angegebener Pfeilrichtung 43 rotiert und die Stellung des Nockens 48 der Scheibe 47 durch die Drehung der Welle erfaßbar ist und zu jedem Zeitpunkt die Winkelstellung erfaßt ist, weiterhin die Positionen der Hocken 48 der Scheibe 47 und der Nocke 66 der Nachbarscheibe 46 fest eingestellt sind, beispielsweise um einen Winkelbetrag von 90°, ergibt sich, daß durch die Verschiebung des Signalgebers um die Welle 42 geänderte Bedingungen gegeben werden, die erfaßt sind. Die Stellung des Nockens 66 zum Einschalten der Bremse ist für die schnellste Taktzahl, die Stellung des Nockens 48, der die Kupplung ein- und die Bremse ausschaltet, ist für die Langsamste Taktzahl eingestellt. Daraus ergibt sich, daß in Verbindung mit einer entsprechenden elektronischen Schaltung, die mit Zeitimpulsen arbeitet, bei einer Drehung des Trägers 53 aus der Stellung nach Fig. 4 nach links entgegen dem Uhrzeigersinn in die Stellung nach Fig. 5 Beutelabschnitte größerer Länge hergestellt werden, weil die Kupplung länger eingeschaltet bleibt. Sofern eine Drehung in entgegengesetzter Richtung vorgenommen wird, dann werden Beutelabschnitte kürzerer Länge hergestellt, weil die Bremse länger eingestellt bleibt. Die in den Figuren 3 bis 5 dargestellte Lösung gibt durch Verstellung der elektrischen Signalgeber um die Drehachse der Nockenscheiben eine einfache Möglichkeit, die Bedingungen zum Zwecke der Veränderung der Beutellänge zu schaffen. Es ergibt sich zugleich, daß mit der gleichen Verschwenkung auch die weiteren Maßnahmen, wie Steuerung der Luft und der Fotozelle vorgenommen werden. Die in den Figuren 3 bis 5 dargestellte Lösung ist einfach, leicht überschaubar und von einfacher Bedienbarkeit. Auch kann in einfacher Weise parallel zum Langloch 63 eine Skala 67 vorhanden sein, die die Beutellänge abhängig von der Winkelstellung der Signalgeber, anzeigt.

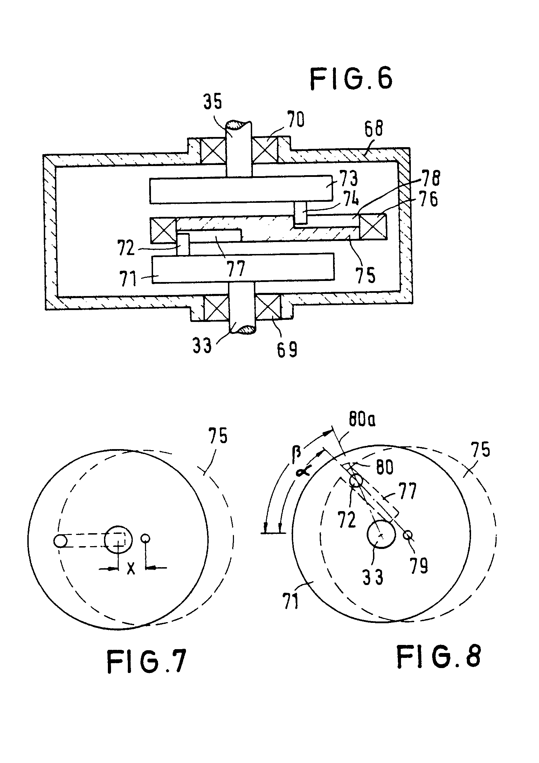

Fig. 2 zeigte, wie vorerwähnt, den Elektromotor 32 mit dem Getriebe 34. Dieses Getriebe ist von besonderer Art und wird anhand der Figuren 6 bis 15 beschrieben.

Fig. 6 zeigt das Getriebe 34, das stufenlos verstellbar ist mit der Maßgabe, daß bei gleichbleibender Drehzahl der Eingangswelle 33 die abgehende Welle 35 unterschiedliche Geschwindigkeiten haben kann, wie das nachfolgend noch erläutert wird. Die Eingangswelle 33 ist gelagert in dem Lager 69, die Ausgangswelle 35 ist gelagert in dem Lager 70. Die Eingangswelle hat eine Scheibe 71, die einen Zapfen 72 trägt. Die Ausgangswelle hat eine Scheibe 73, die einen Zapfen 74 trägt. Zwischen diesen beiden Scheiben ist eine Zwischenscheibe 75 vorhanden, die von einem Lager 76 umgeben ist. Die Zwischenscheibe hat an ihren beiden Seiten radial verlaufende Nuten 77 und 78, die sich nach der Zeichnung nur über einen gewissen Bereich erstrecken, vorzugsweise jedoch sich über den wesentlichen oder ganzen Durchmesser erstrecken.

Die Wirkungsweise ist folgende:

Sofern die Zwischenscheibe 75 bzw. deren Drehachse koaxial zur Drehachse der Eingangswelle 33 und der Ausgangswelle 35 liegt, dann ergibt sich keine differenzierte Geschwindigkeit zwischen Eingangswelle und Ausgangswelle, weil die Stifte 72 und 74 zu beiden Seiten der Rotationsachse der Zwischenscheibe 75 mit gleichem Abstand angreifen. Sofern jedoch entsprechend der Fig. 7 die in gestrichelter Linie dargestellte Zwischenscheibe 75 um den Betrag X verschoben ist, so ergibt sich bei einer Drehung α der Zwischenscheibe mit der Drehachse 79 entsprechend der Verbindungslinie 80 durch den Mittelpunkt der Drehachse und der Mittellängslinie der Nut 77 bei einem Winkel α von 45° eine Verdrehung der Eingangswelle 33 mit der Scheibe 71 und Zapfen 72 entsprechend der Verbindungslinie 80a durch den Mittelpunkt der Eingangswelle und Mittelpunkt des Zapfens ein Drehwinkel β, der größer ist als der Winkel α. Somit wird durch die Zwischenscheibe 75 eine differenzierte Geschwindigkeit zwischen Eingangswelle und Ausgangswelle oder umgekehrt erreicht.

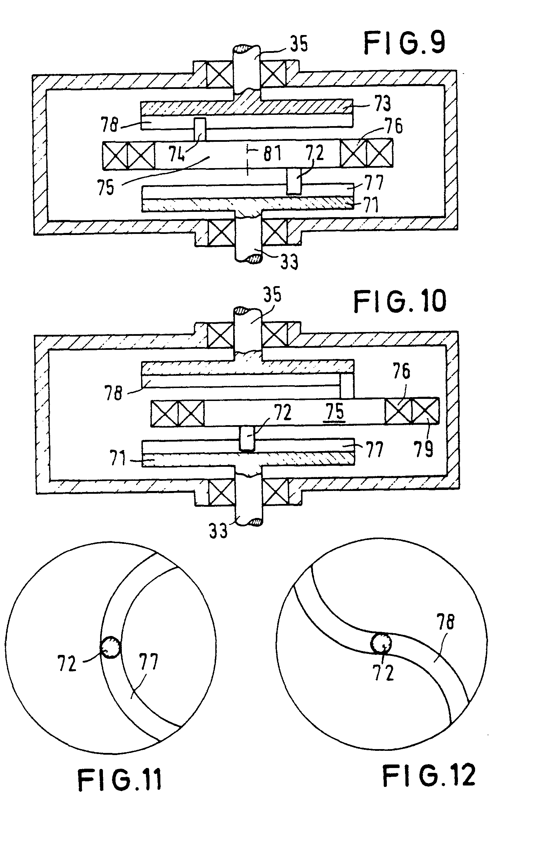

Fig. 6 zeigt, daß die Scheiben 71 und 73 mit zugeordneten Zapfen 72 und 74 versehen sind und die Nuten 77 und 78 an den gegenüberliegenden Seiten der Zwischenscheibe angeordnet sind. Es ist jedoch auch die Lösung möglich, daß Nuten und Zapfen umgekehrt vorhanden sind, wie das später noch anhand der Figur 9 dargestellt ist.

Jedenfalls zeigt die Darstellung nach den Figuren 7 und 8, daß bei jeder Rotation ein Wechsel stattfindet, der im ersten Bereich der Umdrehung 0 bis 180° eine Beschleunigung der abgehenden Welle und im Bereich von 180° bis 360° eine Verlangsamung darstellt, wobei die Amplitude dieses sinusförmigen Verlaufes abhängig ist von der Verstellung x.

Figur 9 zeigt eine Figur 6 gegenüber verbesserte Lösung mit der Maßgabe, daß die Nuten 77 und 78 nicht an der Zwischenscheibe 75, sondern an den Scheiben 71 und 73 angeordnet sind. Auch erstrecken sie sich über den gesamten Durchmesser. Die Zapfen 72 und 74 sind an gegenüberliegenden Seiten der Drehachse 81 im gleichen Abstand angeordnet. Sofern die vorgenannte Drehachse 81 der Zwischenscheibe 75 mit den Wellen 33 und 35 koaxial ist, dann ergibt sich keine differenzierte Geschwindigkeit. Sofern nach Figur 7 die Zwischenscheibe 75 um einen solchen Betrag verschoben ist, daß der Zapfen 72 koaxial zur Eingangswelle 33 angeordnet ist, dann ergibt sich, daß die Welle 33 die Zwischenscheibe 75 nicht zur Rotation bringt, sondern die Scheibe 71 ohne Ausübung eines Drehmomentes bzw. Hebelwirkung um den Zapfen 72 dreht.

Nach Figur 10 sind die Nuten 77 und 78 geradlinig. Nach den Figuren 11 und 12 wird Vorgeschlagen, diese gekrümmt auszubilden, wobei sie stets durch die Drehachse der Scheibe gehen sollen, um die vorerwähnte neutrale Stellung bei rotierender Eingangswelle zu erreichen. Die gekrümmten Nuten haben den Vorteil, daß der vorbeschriebene sinusförmige Verlauf abgewandelt werden kann und beispielsweise ein steiler Anstieg mit flachem Abfall oder umgekehrt erreicht werden kann. Dies wird nachfolgend noch beschrieben werden.

Die Figuren 9 und 10 zeigen, daß das die Zwischenscheibe 75 umgebende Lager 76 selbst nochmals drehbar in einem Lager 79 gelagert ist. Um dies zu erreichen, ist die Zwischenscheibe 75 grundsätzlich gehalten in einer rechteckigen Platte 83 und zwar durch das Lager 76. Sofern dann die Scheibe 75 in angegebener Pfeilrichtung 81 rotiert, rotiert auch der Lagerring an der Zwischenscheibe und der mit ihm verbundene Teil des Lagers in gleicher Pfeilrichtung 81, 81a. Der zweite, mit der Platte 83 verbundene äußere Teil des Lagers oder ein weiteres Lager 79 ist so gelagert und über einen Zapfen 82 in angegebener Pfeilrichtung 81b drehbar, so daß dadurch die Differenz der Eingangswelle und Ausgangswelle und umgekehrt weiterhin gesteuert werden.

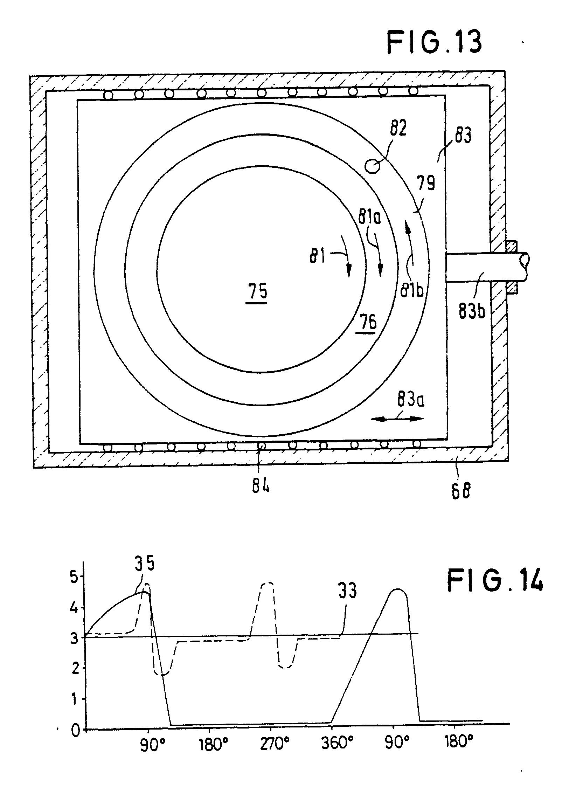

Nach Fig. 13 ist an der Platte 83 ein Stößel 83b vorhanden, der nach außen führt. Die Platte ist im Gehäuse 68 in angegebener Pfeilrichtung 83a zur Betätigung des Stößels 83 hin- und hergehend verschiebbar gelagert, und zwar vorzugsweise über Nadellager 84.

In Verbindung mit der Maßgabe, daß die Zwischenscheibe entgegen der durch die Eingangswelle aufgezwungenen Drehrichtung noch verdreht werden kann, ergeben sich vielseitige Möglichkeiten eines Verlaufs der Differenzgeschindigkeit zwischen Eingangswelle und Ausgangswelle. Diese ist beispielhaft in Figur 14 dargestellt. Die horizontale Linie zeigt die konstante Drehzahl der Eingangswelle 33. In ausgezogener Linie ist die Drehzahl pro Zeiteinheit der abgehenden Welle 35 dargestellt, die ausgehend von einer Ausgangsstellung bei gleicher Drehzahl von Eingangswelle zur Ausgangswelle bei einem Drehwinkel α nach 90° ansteigt. Dann kann, sofern die Zwischenscheibe 75 in die in Fig. 10 dargestellte neutrale Stellung geschoben wird, die Drehzahl der abgehenden Welle auf 0° eingestellt werden, und zwar über einen beliebig langen Zeitraum. In Figur 14 ist beispielsweise ein Drehwinkel bis 360° dargestellt. Dann kann wieder ein steiler Anstieg der Geschwindigkeit und anschließend ein steiler Abfall erfolgen. In gestrichelter Linie ist ein weiterer Kurvenverlauf dargestellt, der nur beispielhaft ist. Da die Verschiebung der Zwischenscheibe in weiten Grenzen und bei Rotation der Eingangswelle und Ausgangswelle stattfinden kann, so ist es, wie vorerwähnt, möglich, daß bei der in Figur 10 dargestellten Stellung die Eingangswelle rotiert und die Ausgangswelle stillsteht.

Abhängig davon, ob die Zwischenscheibe nach links oder nach rechts geschoben wird und abhängig vom Kurvenverlauf der Nuten ergeben sich viele Variationsmöglichkeiten. Diese werden noch verbessert durch die Maßgabe, daß die eine Scheibe eine Nut 78 solcher gekrümmter Ausbildung hat, die zu der Nut 77 an der gegenüberliegenden Scheibe mit gleicher Raumform versetzt ist oder anders ausgebildet ist. Um dies einfach erreichen zu können, wird nach Figur 9 vorgeschlagen, daß an der Zwischenscheibe 71 die Nut 77 auswechselbar befestigt ist.

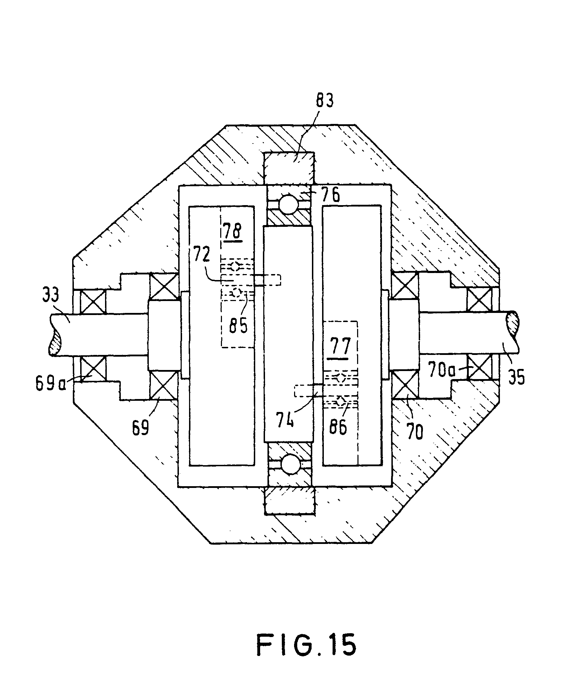

Figur 15 zeigt, daß die Eingangswelle 10 mit zwei Kugellagern 69 und 69a und die Ausgangswelle 35 mit einem weiteren Kugellager 70a versehen ist. Die Zapfen 72 und 74 sind an ihren in die Nuten eingreifenden Enden mit zugerodneten Kugel lagern 85, 86 versehen.

Zurückblickend auf die Figuren 1 und 2 ergibt sich, daß das Getriebe 34 in der Lage ist, über die abgehende Welle 35 und das Zahnrad 36 mit der Kette 36a und das Kettenrad 38 die Welle 39 des Schweißbalkenantriebes mit ungleichmäßiger Umfangsgeschwindigkeit zu drehen mit der Maßgabe, daß der Nocken 30, abhängig von der augenblicklichen Umfangsgeschwindigkeit bzw. Drehzahl, eine längere oder kürzere Zeit an der Tastrolle 26 zur Anlage kommt. Da die Umfangsgeschwindigkeit bzw. die Drehzahl pro Zeiteinheit verändert ist, wobei der Zeitpunkt der Veränderung im Getriebe selbst einstellbar ist, hingewiesen wird dazu auf den möglichen Kurvenverlauf der Nuten, aber auch auf die axiale Stellung des Zapfens 72 in der Drehachse der Eingangswelle und der Ausgangswelle, so daß die abgehende Welle nicht rotiert, ergeben sich mit dem erfindungsgemäßen Getriebe speziell für Folienverbeitungsmaschinen neue Möglichkeiten. Dadurch ist es möglich, daß die Nockenscheibe 30 nicht eine solche Erstreckung über den Umfang zu haben braucht, der bei bisheriger gleichbleibender Rotation die Schweißdauer bestimmt. Mit dem erfindungsgemäßen Getriebe, angewendet in einer Folienverarbeitungsmaschine, kann nunmehr der Nocken sich lediglich um einen geringen Betrag über den Umfang der Nockenscheibe erstrecken, weil die Verlangsamung der Drehzahl bzw. Umfangsgeschwindigkeit hier den notwendigen Ausgleich gibt. So kann entsprechend durch Änderung der Drehzahl der Nockenscheibe während eines Umlaufes die Zeit der Anlage der Schweißbacken durch diese Änderung der Drehzahl bei gleichbleibender Umfangslänge des Nockens 30 erfolgen.

Figur 1 zeigt, daß an dem weiteren Elektromotor 32a ein weiteres Getriebe 34a vorhanden ist, das über ein Zahnrad 36b mit zugeordneter Kette 36c das Antriebsritzel 38a der Welle der Vorzugswalze 14 antreibt. Auch hier ergibt die in Figur 10 beschriebene Lösung die Möglichkeit der Rotation und der Stillsetzung der Rotation, die Vorzugswalze anzutreiben und entsprechend zu stoppen. Das Getriebe mit einer Kupplung und Bremse, wie es bisher üblich war, ist somit nicht notwendig.

Auch die Umlenkrolle 22 kann mit einem Getriebe 34 angetrieben werden mit der Maßgabe, daß die Umfangsgeschwindigkeit der Rolle 22 und entsprechend auch die Bewegungsgeschwindigkeit des Bandes 21, das das Messer 22 trägt, ungleichmäßig ist mit der Maßgabe, daß im Bereich des Messers zwischen den Balken 16 und 17 eine hohe Umfangsgeschwindigkeit stattfindet, während im Bereich des Messers außerhalb des Schweißbalkens eine langsame Geschwindigkeit stattfindet. Durch diese Maßgabe läßt sich ein großer Vorteil erreichen. Bei bisherigen umlaufenden Messern hat dieses seine Geschwindigkeit von ca. 360 m pro Minute mit der Maßgabe, daß pro Takt der Beutelherstellung das Messer dreimal umläuft. Somit muß eine Abstimmung zwischen umlaufendem Messer und den Balken vorhanden sein.

Mit der erfindungsgemäßen Lösung kann das Messer mit einer Geschwindigkeit von 800 m pro Minute umlaufen. Da diese hohe Umlaufgeschwindigkeit nur im Bereich zwischen den Schweißbalken beim Schneiden notwendig und vorhanden ist, genügt insgesamt pro Takt der Beutelherstellung nur ein Umlauf, weil im Bereich außerhalb der Balken eine geringe Geschwindigkeit vorhanden ist, die im Bereich zwischen den Messern kompensiert wird durch eine höhere Geschwindigkeit.

Die vorerwähnte Kombination des Getriebes mit differenzierten Geschwindigkeitsänderungen in Verbindung mit einer Nockenscheibe läßt verschiedene Abwandlungen und vielfache Steuerungsmöglichkeiten bei der Folienverarbeitung zu. So können auch die Vorzugswalzen 14 und 15, die zweckmäßig durch eine sie verbindende Kette 36d verbunden sind, mit ungleichförmiger Umfangsgeschwindigkeit angetrieben werden, beispielsweise mit der Maßgabe, daß das Beschleunigen mit anfänglich geringer Geschwindigkeit erfolgt, die sich dann schnell steigert, während in der Endphase wiederum ein langsames Abklingen der Geschwindigkeit vorhanden ist. Dadurch wird eine schonende Bewegung der Folie erreicht.

**Patentansprüche**

1. Folienverarbeitungsmaschine zum Herstellen von Beuteln, Säcken oder dergleichen Verpackungen aus thermoplastischer Kunststoffolie, mit einem ersten Antrieb aus Elektromotor (32) und Getriebe (34) zum Antrieb von Schweißbalken (16, 17) und mit einem zweiten Antrieb zum Antrieb von Vorzugswalzen (14, 15), wobei der erste Antrieb außerdem eine rotierende Welle (42) mit mehreren Hockenscheiben (44 - 47) antreibt, deren Nocken (48, 66) jeweils ein elektrisches Schaltelement als Signalgeber (54 - 57) betätigen und dadurch den zweiten Antrieb ein- und ausschalten,
dadurch gekennzeichnet,
daß alle Hockenscheiben (44 - 47) relativ zueinander fest an der Antriebswelle (42) angebracht sind, so daß ihre Hocken (48, 66) feste gegenseitige Abstände haben, daß zur Steuerung eines veränderten Bewegungsablaufes die Signalgeber (54 - 57) an einem gemeinsamen Träger (53) angeordnet ist, der um die Antriebswelle (42) der Hockenscheiben (44 - 47) schwenkbar und in seinen verschiedenen Stellungen arretierbar ist, und daß das Getriebe (34) des ersten Antriebs die Antriebswelle (42) der Nockenscheiben (44 - 47) mit entsprechend der Umdrehungsphase variierender Geschwindigkeit antreibt, derart daß durch Verschwenken des Trägers (53) die Länge der herzustellenden Beutel veränderbar ist.

2. Folienverarbeitungsmaschine nach Anspruch 1, dadurch gekennzeichnet, daß an dem Träger (53) das eine Ende eines Hebels (61) schwenkbar gelagert ist, dessen anderes Ende in Verbindung mit einer Stellschraube (62) in ein Langloch (63) am Maschinenrahmen geführt ist.

3. Folienverarbeitungsmaschine nach Anspruch 1 oder 2, dadurch gekennzeichnet, daß das Getriebe (34) des ersten Antriebs eine mit der Eingangswelle (33) verbundene Scheibe (31) und eine mit der Ausgangswelle (35) verbundene Scheibe (71) aufweist, wobei jede der Scheiben über einem exzentrisch angeordneten Mitnehmer (72) mit einer Zwischenscheibe (75) zusammengreift und eine Scheibe (75) radial zu ihrer Drehachse verschiebbar ist.

4. Folienverarbeitungsmaschine nach Anspruch 3, dadurch gekennzeichnet, daß in dem Getriebe die Scheibe (71) der Eingangswelle (33) und die Scheibe (73) der Ausgangswelle (35) jeweils mit einer sich im wesentlichen in radialer Erstreckung verlaufenden Nut (77, 78) versehen sind und die radial verschiebbare Zwischenscheibe (75) in gleichem Abstand zu ihrer Drehachse (81) an der einen Seite einen Stift (72) hat, der in die Nut (77) der mit der Eingangswelle (33) verbundenen Scheibe (71) eingreift und an der anderen Seite einen Stift (74) hat, der in die Nut (78) der mit der Ausgangswelle (35) verbundenen Scheibe (73) eingreift.

5. Folienverarbeitungsmaschine nach einem der Ansprüche 1 bis 4, dadurch gekennzeichnet, daß die Schweißbalken von dem ersten Antrieb über eine Nockensteuerung (28) angetrieben sind.

6. Folienverarbeitungsmaschine nach Anspruch 5, dadurch gekennzeichnet, daß die Ausgangswelle (35) des Getriebes (34) eine Umlenkrolle (22) für ein Band (21) antreibt, an der ein Messer (20) angeordnet ist.

**Claims**

1. Foil processing machine for producing bags, sacks or the like packings made of thermoplastic plastics foil, comprising a first drive means for driving welding beams (16, 17), said first drive means being provided with an electric motor (32) and a transmission means (34), and a second drive means for driving advance rolls (14, 15), said first drive means further driving a rotating shaft (42) with a plurality of cam disks (44 - 47), the cams (48, 66) of which cam disks each actuate an electric switching element as a signal generator (54 - 57) and thereby switch the second drive means on and off,
characterized in that
all of the cam disks (44 - 47) are fixedly mounted to said driving shaft (42) with regard to each other so that their cams (48, 66) have fixed mutual distances, that for controlling a changed moving sequence the signal generators (54 - 57) are arranged at a common support (53) which is pivotable about the driving shaft (42) of the cam disks (44 - 47) and can be locked in its different positions, and that the transmission means (34) of the first drive means drives the driving shaft (42) of the cam disks (44 - 47) at a speed varying corresponding to the rotating phase such that by swivelling the support (53) the length of the bags to be produced can be changed.

2. Foil processing machine according to claim 1, characterized in that the one end of a lever (61) is pivotably supported by the support (53), the other end of said lever in connection with an adjusting screw (62) being guided in a longitudinal hole (63) at the frame of the machine.

3. Foil processing machine according to claims 1 or 2, characterized in that the transmission means (34) of the first drive means is provided with a disk (71) connected to the input shaft (33) and a disk (73) connected to the output shaft (35), each of said disks engaging with an intermediate disk (75) by an excentrically arranged entraining means (72), and a disk (75) being displaceable radially to its rotational axis.

4. Foil processing machine according to claim 3, characterized in that in the transmission means the disk (71) of the input shaft (33) and the disk (73) of the output shaft (35) are each provided with a groove (77, 78) extending substantially in radial direction and the radially displaceable intermediate disk (75) at the same distance to its rotational axis (81) has a pin (72) at one side, said pin engaging the groove (77) of the disk (71) connected to the input shaft (33), and has a pin (74) at the other side, engaging the groove (78) of the disk (73) connected to the output shaft (35).

5. Foil processing machine according to any one of claims 1 to 4, characterized in that the welding beams are driven by the first drive means via a cam controller (28).

6. Foil processing machine according to claim 5, characterized in that the output shaft (35) of the transmission means (34) drives a guide roller (22) for a belt (21), which guide roller (22) has a knife (20) arranged thereat.

## Revendications

1. Machine de traitement de feuilles permettant de produire des sacs, sachets ou emballages analoges en feuille de matière thermoplastique, comportant un premier entraînement formé d'un moteur électrique (32) et d'un mécanisme de transmission (34) et destiné à l'entraînement de mâchoires de soudage (16, 17) et un second entraînement destiné à l'entraînement de rouleaux d'avance (14, 15), le premier entraînement entraînant en outre un arbre rotatif (42) comportant plusieurs disques à came (44 - 47) dont les cames (48, 66) actionnent chacune un élément électrique de commutation servant d'émetteur de signaux (54 - 57) et mettent de ce fait en et hors service le second entraînement, caractérisée en ce que tous les disques à came (44 - 47) sont montés sur l'arbre d'entraînement (42) de manière immobile les uns par rapport aux autres, de façon telle que leurs cames (48, 66) présentent des espacements mutuels fixes, en ce que, pour commander un mouvement modifié, les émetteurs de signaux (55 - 57) sont montés sur un support commun (53) qui peut pivoter autour de l'arbre d'entraînement (42) des disques à came (44 - 47) et peut être bloqué dans ses diverses positions et en ce que le mécanisme de transmission (34) du premier entraînement entraîne l'arbre d'entraînement (42) des disques à came (44 - 47) avec une vitesse qui varie en fonction de la phase du mouvement de révolution de façon telle que la longueur des sacs à fabriquer peut être modifiée en décalant en rotation le support (53).

2. Machine de traitement de feuilles suivant la revendication 1, caractérisée en ce qu'est montée pivotant sur le support (53) l'une des extrémités d'un levier (61) dont l'autre extrémité est guidée, en coopération avec une vis de réglage (62), dans une lumière (63) prévue sur le bâti de la machine.

3. Machine de traitement de feuilles suivant la revendication 1 ou 2, caractérisée en ce que le mécanisme de transmission (34) du premier entraînement comprend un disque (71) solidaire de l'arbre d'entrée (33) et un disque (73) solidaire de l'arbre de sortie (35), chacun de ces disques attaquant un disque intermédiaire (75) par un élément d'entraînement (72) disposé de manière excentrique, et en ce que ce disque (75) peut être déplacé radialement par rapport à son axe de rotation.

4. Machine de traitement de feuilles suivant la revendication 3, caractérisée en ce que, dans le mécanisme de transmission, le disque (71) de l'arbre d'entrée (33) et le disque (73) de l'arbre de sortie (35) sont pourvus chacun d'une rainure (77, 78) s'étendant essentiellement suivant une orientation radiale et en ce que le disque intermédiaire (75) déplaçable radialement présente, à une distance égale de son axe de rotation (81), sur l'un de ses côtés, un doigt (72) qui s'engage dans la rainure (77) du disque (71) solidaire de l'arbre d'entrée (33) et, sur l'autre côté, un doigt (74) qui s'engage dans la rainure (78) du disque (73) solidaire de l'arbre de sortie (35).

5. Machine de traitement de feuilles, suivant l'une des revendications 1 à 4, caractérisée en ce que les mâchoires de soudage sont entraînées par le premier entraînement par l'intermédiaire d'une commande à came (28).

6. Machine de traitement de feuilles suivant la revendication 5, caractérisée en ce que l'arbre de sortie (35) du mécanisme de transmission (34) entraîne un galet de renvoi (22) prévu pour une bande (21) sur laquelle est monté un couteau (20).

FIG.1

FIG. 2

FIG. 3

FIG. 4

FIG. 5

FIG.6

FIG.7

FIG.8

FIG.9

FIG.10

FIG.11

FIG.12

FIG.13

FIG.14

FIG.15